# DEMANDE DE BREVET EUROPEEN

(11) **EP 4 459 923 A1**
(43) Date de publication de la demande: **06.11.2024**
(21) Numéro de dépôt: 24173928.3
(22) Date de dépôt: 02.05.2024
(51) Int. Cl.: H04L 9/08, H04B 10/70, H04B 7/185

(54) **DISPOSITIF DE GENERATION D'UN SIGNAL OPTIQUE POUR LA DISTRIBUTION DE CLES QUANTIQUES**

(30) Priorité: 04.05.2023 FR 2304460
(71) Demandeur: THALES, 92190 Meudon (FR)
(72) Inventeur: GAYRARD, Jean-Didier, 31270 CUGNAUX (FR); BERTRAND, Mathieu, 31037 TOULOUSE Cedex1 (FR)
(74) Mandataire: Atout PI Laplace

(57) **Abrégé**

L'invention concerne un dispositif de génération d'un signal optique pour l'échange quantique de clés, comprenant :
- une source photonique (501) générant au moins un flux d'impulsions,
- un transducteur CAN (503) convertissant les photons d'un flux d'impulsions en une suite binaire aléatoire,
- un modulateur d'état quantique (502) mettant les photons des impulsions dans un nombre et un état quantique défini par un mot de commande pour générer le signal optique à partir d'un des flux d'impulsions (501),
- des moyens de calcul numériques (504) :
o générant au moins une séquence aléatoire (505) ayant une distribution de probabilité et un rythme donnés à partir de la suite binaire aléatoire,
o générant le mot de commande (506) conformément au protocole d'échange de clés à partir de ladite au moins une séquence aléatoire.

L'invention concerne également une charge utile pour satellite comprenant un tel dispositif de génération d'un signal optique.

## Description

### Domaine technique :

L'invention se situe dans le domaine technique des dispositifs permettant l'échange ou la distribution quantique de clés (en anglais QKD pour *Quantum Key Distribution*), et plus particulièrement lorsque l'échange de clés est mis en oeuvre par un protocole de type Prépare & Mesure (en anglais *Prepare and Measure*) à variable discrète (en anglais DV pour *Discrete Variable*)*.*

L'invention porte sur un dispositif d'émission d'un signal optique performant et compact, présentant une résistance élevée face aux risques d'attaques par mesures des rayonnements électromagnétiques.

### Technique antérieure :

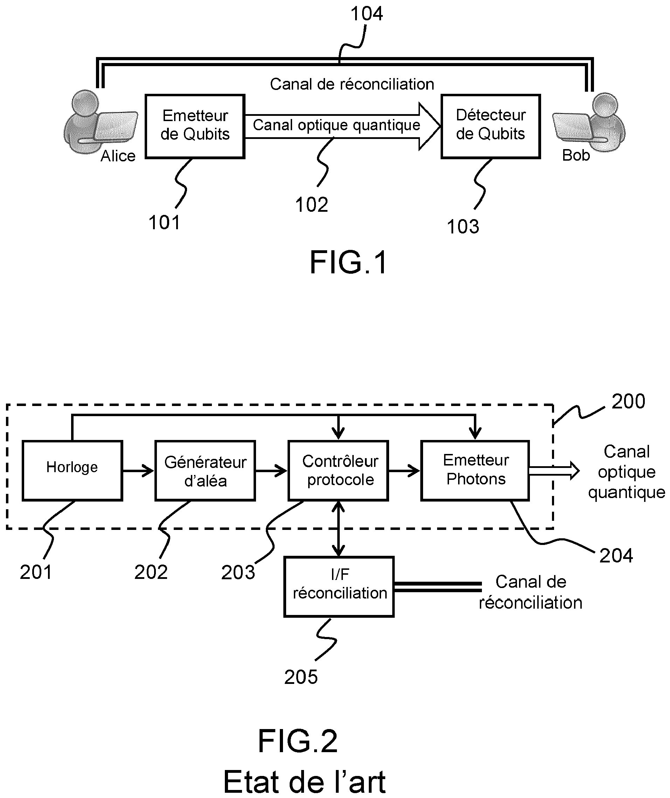

La figure 1 représente schématiquement le fonctionnement d'un échange/d'une distribution de clés secrètes par liaison optique quantique (QKD).

Cet échange/distribution implique :
- un émetteur 101 (généralement appelé Alice) configuré pour émettre une suite de qubits sur un canal optique 102. Dans les protocoles de type Prépare et Mesure à variable discrète, un qubit correspond à un photon dont l'état quantique code l'information 0 ou 1 sur plusieurs bases possibles choisies aléatoirement (ce qui correspond à l'étape *Prépare*)*.* L'état du photon peut par exemple être sa polarisation, sa phase, son temps d'arrivée, etc. ;
- un récepteur/détecteur 103 de qubits (généralement appelé Bob), qui détecte les photons dans une base choisie aléatoirement, et en mesure l'état, donc la valeur (0 ou 1) (ce qui correspond à l'étape *Mesure*)*.*

Pour établir une clé, l'émetteur 101 émet une suite aléatoire de qubits (suite de 0 et de 1) dans des bases choisies aléatoirement. Le récepteur 103 mesure les qubits de cette suite sur ses propres bases et reconstruit une suite de bits incomplète et fragmentaire, suite aux dégradations du signal liées à la transmission sur la liaison optique 102 (photons perdus sur le trajet, photons parasites, erreurs de mesure,...). Un processus dit de réconciliation, réalisé sur un canal de réconciliation 104, permet de générer une clé secrète connue seulement par l'émetteur 101 (Alice) et le récepteur 103 (Bob) à partir des deux suites aléatoires : la suite aléatoire émise par Alice et la suite reçue et reconstituée par Bob.

Dans les protocoles Prépare et Mesure à variable discrète, comme par exemple le protocole BB84, l'émetteur 101 (Alice) émet une suite aléatoire de qubits encodés sur plusieurs bases possibles et deux valeurs possibles (0 et 1). Idéalement, les qubits sont constitués de photons uniques. Dans les modes de réalisation où la source optique est un laser atténué, et non une source de photons uniques, celle-ci génère des états cohérents pouvant contenir un nombre fini de photons par impulsion avec une probabilité poissonienne. Des leurres peuvent être introduits afin de prévenir les attaques d'un tiers hostile (appelé Eve) basées sur la mesure de photons additionnels dans le cas d'impulsions à plusieurs photons. On parle alors de protocole BB84 decoy.

La figure 2 représente schématiquement l'architecture d'un émetteur de qubits 200 pour un protocole Prépare et Mesure à variable discrète, comme par exemple le protocole BB84. Il comprend :
- une horloge 201,
- un équipement configuré pour générer un aléa 202,
- un équipement configuré pour réaliser une fonction de contrôleur de protocole 203, et
- un équipement source de photons « modulés », ou émetteur de photons 204.

Le contrôleur de protocole 203 de l'émetteur de qubits 200 est fonctionnellement connecté au canal de réconciliation par un dispositif noté Interface (I/F) de réconciliation 205 pour l'exemple. Les fonctions de contrôle et de gestion du canal de réconciliation, de contrôle et de déroulement du processus de réconciliation sont réparties entre les deux dispositifs de l'exemple : le contrôleur de protocole 203 de l'émetteur de qubits et l'interface de réconciliation 205.

L'horloge 201 cadence le dispositif et définit le taux de transmission de la suite aléatoire de qubits par train d'impulsions.

Cette suite aléatoire est fournie par un générateur de nombres aléatoires 202, et plus avantageusement par un générateur quantique de nombres aléatoires (QRNG, sigle anglais pour *Quantum Random Number Generator*)*.* Un QRNG est un générateur utilisant un phénomène quantique pour générer de l'aléa. Il garantit une excellente entropie à la suite d'aléa générée. Un tel générateur est basé sur un phénomène physique microscopique qui génère un signal de bruit statistiquement aléatoire (par exemple le bruit de grenaille ou *shot noise* d'une photodiode). Un générateur de nombres aléatoires consiste typiquement en :
- un transducteur pour convertir le phénomène physique en un signal électrique aléatoire,
- éventuellement, un amplificateur pour amplifier les fluctuations aléatoires à un niveau mesurable, et
- un convertisseur analogique numérique (CAN pour convertir le signal en un nombre (suite binaire de 0 et de 1).

Le contrôleur de protocole 203 est un dispositif numérique (par exemple un calculateur, un FPGA (sigle anglais pour *Field Programmable Gate Array,* ou réseau de portes programmable), un ASIC (acronyme anglais pour *Application-Specific Integrated Circuit*, ou circuit intégré propre à une application) ou un DSP (sigle anglais pour *Digital Signal Processor*, ou processeur de signal numérique) qui pilote la source photonique en accord avec le protocole choisi. A partir de la suite de nombres aléatoires fournie par le QRNG 202, le contrôleur de protocole 203 crée une suite d'instructions ou mots de commande destinée à l'émetteur de photons 204.

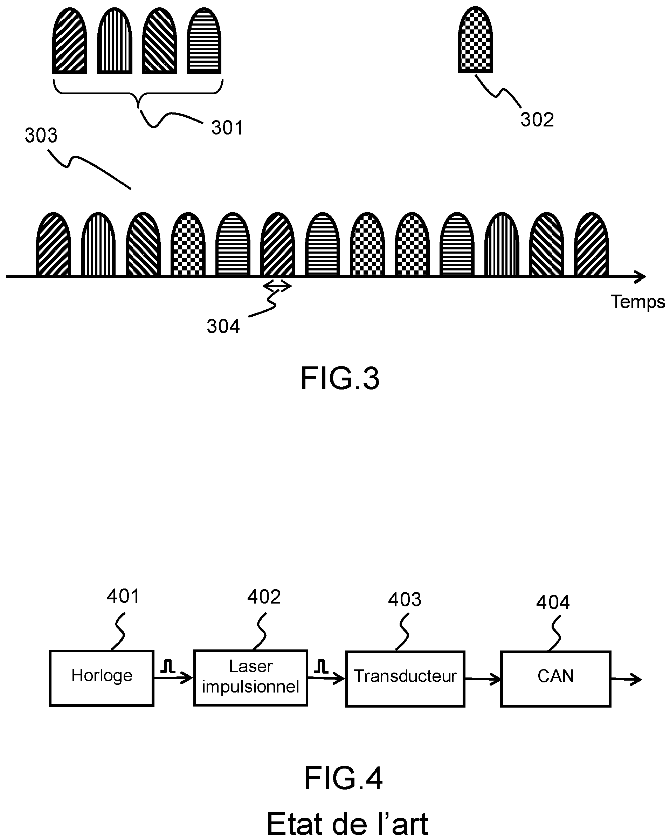

La figure 3 illustre la constitution d'un signal optique utilisé pour un échange quantique de clés. Par exemple, dans le cas d'un protocole BB84 decoy encodé en polarisation, le signal optique est constitué d'une succession d'impulsions temporelles 304, ces impulsions sont soit des impulsions qubit, soit des impulsions leurre.

En référence à la figure 3, à chaque impulsion temporelle 304 du train d'impulsions généré par l'horloge, l'émetteur ou source de photons 204 émet, en fonction des instructions ou des mots de commande fournies par le contrôleur de protocole :
- soit une impulsion temporelle contenant un nombre moyen de photons égal à une valeur prédéfinie du protocole et dont l'état de polarisation définit la valeur binaire. Cette impulsion est définie comme un qubit. Pour le protocole BB84 ou BB84 decoy, le photon d'un qubit a quatre états de polarisation 301 possibles : vertical (|), horizontal (-), diagonal (/) et anti-diagonal (\). La valeur de l'état de polarisation est définie par le mot de commande correspondant à l'impulsion ;
- soit une impulsion contenant un nombre moyen de photons (ou intensité) défini par le mot de commande correspondant. Cette impulsion est définie comme un leurre 302. L'état de polarisation des photons de l'impulsion leurre prend un des quatre états de polarisation possible des photons des impulsions qubit selon le mot de commande.

Le nombre de bits requis pour coder l'instruction ou mot de commande du contrôleur de protocole 203 pour la source de photons 204 est d'au moins 4 bits par impulsion. Par exemple, 1 bit ou plus pour définir le type de l'impulsion (qubit ou leurre), 1 bit pour définir la valeur du qubit (0 ou 1), 1 bit ou plus pour définir la base d'encodage (polarisation rectiligne ou diagonale, phase,...), 1 bit ou plus pour définir l'amplitude (ou intensité) de l'impulsion leurre (nombre de photons par impulsion), etc. Ces instructions destinées à l'émetteur de photon 204 sont élaborées et encodées par le contrôleur de protocole 203 à partir de la suite aléatoire issue du générateur de nombres aléatoires 202 et en conformité avec le protocole prépare et mesure choisi.

D'autres protocoles d'échange quantique de clé sont connus, comme par exemple le protocole B92, qui est une version simplifiée du protocole BB84 utilisant deux états de polarisation (l'état de polarisation horizontal (-) de la base rectiligne et +45° (/) de la base diagonale), ou le protocole SSP (sigle anglais pour *Six-State Protocol*, ou protocole à six états), qui est aussi une version modifiée du BB84 utilisant six états de polarisation.

Pour assurer la sécurité de la suite de qubits 303 générée face à une attaque, le contenu des impulsions temporelles 304 correspondant aux qubits et aux leurres, leurs états de polarisation et l'amplitude (ou intensité) des leurres doivent être totalement aléatoires, avec des densités de probabilité définies en fonction du protocole d'échange quantique de clé implémenté. La qualité de la clé de cryptage échangée dépend de l'entropie de la séquence aléatoire.

Dans l'émetteur de photons 204, l'encodage des qubits et des leurres (typiquement leur polarisation et leur amplitude) est réalisé par diverses techniques impliquant pour la plupart des lasers atténués. Le pilotage de ce « modulateur » de photons est fait par le contrôleur de protocole 203.

Les solutions existantes basées sur l'architecture représentée à la figure 2 présentent cependant des inconvénients :
- le débit (c'est-à-dire la fréquence de fonctionnement) du générateur de nombres aléatoires 202 doit être au moins quatre fois supérieur au débit de transmission de la suite de qubits (correspondant à la fréquence du train d'impulsions). En effet, le contrôleur de protocole 203 doit fournir un mot de commande à l'émetteur de photon 204 d'une longueur d'au moins 4 bits. La constitution de la suite des impulsions temporelles (qubits, leurres) doit être aléatoire et découler de la séquence de nombres aléatoires fournis par le générateur 202. L'état de l'art actuel des générateurs quantiques de nombres aléatoires (QNRG) fait état de fréquences de fonctionnement de quelques dizaines à quelques centaines de Mégahertz, ce qui constitue une limite à l'augmentation future du débit des émetteurs de séquence de qubits ;
- l'architecture de la figure 2 désigne plusieurs équipements distincts : le QNRG 202, le contrôleur de protocole 203, la source de photons 204. Cette architecture a un impact négatif sur le coût d'acquisition, la durée de développement, d'approvisionnement, d'intégration et de tests de l'émetteur de qubits ;
- une connexion électrique est nécessaire entre le QRNG 202 et le contrôleur de protocole 203. Cette liaison peut être espionnée facilement, en mesurant à distance les rayonnements électromagnétiques qu'elle génère, ce qui constitue une faille de sécurité.

Un objet de l'invention est donc de définir un dispositif de génération d'un signal optique compact et compétitif dont l'architecture permet de palier les défauts de l'art antérieur énoncés ci-dessus. Le dispositif selon l'invention y parvient en intégrant, le cas échéant en un seul et même équipement, les fonctions de générateur et de modulateur d'état quantique de photons, de contrôleur de protocole, de génération et d'extraction d'aléa, et d'adaptation au média de transmission (fibre optique ou espace libre).

### Résumé de l'invention :

A cet effet, la présente invention décrit un dispositif de génération d'un signal optique sous la forme d'une succession d'impulsions optiques dont un état quantique code une information binaire pour l'échange quantique de clés entre un émetteur et un récepteur. Le dispositif selon l'invention comprend, dans un même équipement :
- une source photonique configurée pour générer au moins un flux d'impulsions comprenant un ou plusieurs photons,
- un dispositif dit transducteur CAN configuré pour convertir les photons d'un des flux d'impulsions générés par la source photonique en une suite binaire aléatoire,
- un modulateur d'état quantique configuré pour générer le signal optique à partir d'un des flux d'impulsions générés par la source photonique en ajustant le nombre et l'état quantique du ou des photons des impulsions, le nombre et l'état quantique du ou des photons des impulsions étant définis par un mot de commande,
- des moyens de calcul numériques configurés pour :
   ∘ générer au moins une séquence aléatoire ayant une distribution de probabilité et un rythme donnés, à partir de la suite binaire aléatoire produite par le transducteur CAN,
   ∘ générer le mot de commande transmis au modulateur d'état quantique conformément à un protocole d'échange de clés donné, à partir de la ou des séquences aléatoires.

Selon un mode de réalisation de l'invention, le dispositif de génération d'un signal optique comprend en outre un dispositif d'adaptation du signal optique délivré par le modulateur d'état quantique au média de transmission du signal optique.

Avantageusement, le media de transmission du signal optique est choisi parmi une fibre optique et l'espace libre.

Selon le mode de réalisation du dispositif de génération d'un signal optique selon l'invention, la source photonique peut-être :
- un laser impulsionnel configuré pour générer un flux d'impulsions optiques, associé à un diviseur de puissance configuré pour générer au moins deux flux d'impulsions à partir du flux d'impulsions du laser impulsionnel ;
- un laser impulsionnel configuré pour générer deux flux d'impulsions,
- une source de photons unique configurée pour générer un flux d'impulsions comprenant chacune un photon, associée à une lame séparatrice configurée pour diviser le flux d'impulsions en au moins deux flux d'impulsions distincts, ou
- une source de photons unique configurée pour générer deux flux de photons uniques.

Le transducteur CAN est configuré pour exploiter un phénomène quantique aléatoire des photons d'un des flux d'impulsions générés par la source photonique pour déterminer la suite binaire aléatoire.

Selon le mode de réalisation du dispositif de génération d'un signal optique selon l'invention, le phénomène quantique aléatoire exploité par le transducteur CAN est choisi parmi :
- la phase initiale des impulsions,
- l'amplitude des impulsions,
- l'instant d'apparition des impulsions,
- les motifs de chatoiement (en anglais « *speckle* ») des impulsions.

Avantageusement, la ou les séquences aléatoires générées par les moyens de calcul sont obtenues en appliquant des fonctions mathématiques à sens unique à la suite binaire aléatoire produite par le transducteur CAN.

Selon un mode de réalisation du dispositif de génération d'un signal optique selon l'invention, les moyens de calcul numériques sont en outre configurés pour mettre en oeuvre un processus de réconciliation des données transmises au récepteur.

L'invention porte également sur une charge utile pour un satellite configuré pour réaliser une mission d'échange quantique de clés avec une station terrestre, la charge utile comprenant :
- un dispositif de génération d'un signal optique selon un mode de réalisation de l'invention,
- un terminal optique relié à une sortie du dispositif de génération d'un signal optique,
- un modem optique relié audit terminal optique ou un modem radiofréquence relié à une antenne radio,
- un contrôleur de mission configuré pour superviser le séquencement des opérations d'échange quantique de clés, et
- un dispositif de synchronisation et de mesure de polarisation configuré pour assurer la synchronisation entre le dispositif de génération d'un signal optique et la station terrestre, et pour mesurer des distorsions subies par le signal optique entre le dispositif de génération d'un signal optique et la station terrestre.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 représente schématiquement le fonctionnement d'un échange/d'une distribution de clés secrètes par liaison optique quantique (QKD).
- la figure 2 représente schématiquement l'architecture d'un émetteur de qubits pour un protocole Prépare et Mesure à variable discrète selon l'état de l'art.
- la figure 3 illustre la constitution d'un signal optique selon l'état de l'art, utilisé pour un échange quantique de clés.
- la figure 4 représente schématiquement l'architecture d'un type de générateur de nombres aléatoires quantique, tel que connu de l'état de l'art.
- la figure 5 représente un dispositif de génération d'un signal optique selon un mode de réalisation de l'invention.
- la figure 6 représente un dispositif de génération d'un signal optique selon un autre mode de réalisation de l'invention.
- la figure 7 représente un dispositif de génération d'un signal optique selon un autre mode de réalisation de l'invention.
- la figure 8 illustre les composantes d'une mission d'échange quantique de clés par satellite.
- la figure 9 illustre un exemple de charge utile embarquée à bord d'un satellite.

Des références identiques peuvent être utilisées dans des figures différentes lorsqu'elles désignent des éléments identiques ou comparables.

### Description détaillée :

L'homme du métier a connaissance de générateurs quantiques de nombres aléatoires (QRNG) utilisant les propriétés physiques de phénomènes quantiques aléatoires des lasers impulsionnels. La figure 4 représente un tel générateur de nombres aléatoires quantique. Il comprend un laser impulsionnel 402 configuré pour générer un flux d'impulsions cadencé par une horloge 401. Le flux d'impulsion est converti en une suite binaire aléatoire par un transducteur 403 et un convertisseur analogique / numérique (CAN) 404 utilisant les propriétés quantiques aléatoires des impulsions, par exemple la phase initiale des impulsions, leur amplitude ou intensité, leur instant d'apparition (position dans l'impulsion), les motifs de chatoiement (*speckle* en anglais), etc. Le transducteur 403 convertit la propriété physique quantique aléatoire choisie en un signal électrique, l'amplifie et le formate. Le convertisseur analogique / numérique (CAN) 404 convertit le signal électrique généré et amplifié par le transducteur en une valeur numérique (un mot binaire de 8 bits par exemple). Du fait de la nature éminemment aléatoire des propriétés physiques des phénomènes quantiques, la séquence des valeurs numériques générée est aléatoire avec une très bonne entropie.

L'idée de l'invention consiste à combiner les fonctions de générateur quantique de nombres aléatoires et d'émetteur de photons, et avantageusement à regrouper ces fonctions et la fonctionnalité de contrôleur de protocole en un seul équipement autonome. En outre, une fonction d'extraction d'aléas y est ajoutée, permettant :
- d'augmenter le débit des qubits,
- d'accroître l'entropie de la suite aléatoire de qubits, et
- de fournir au contrôleur de protocole des suites aléatoires de bits avec des densités de probabilités adaptées au protocole.

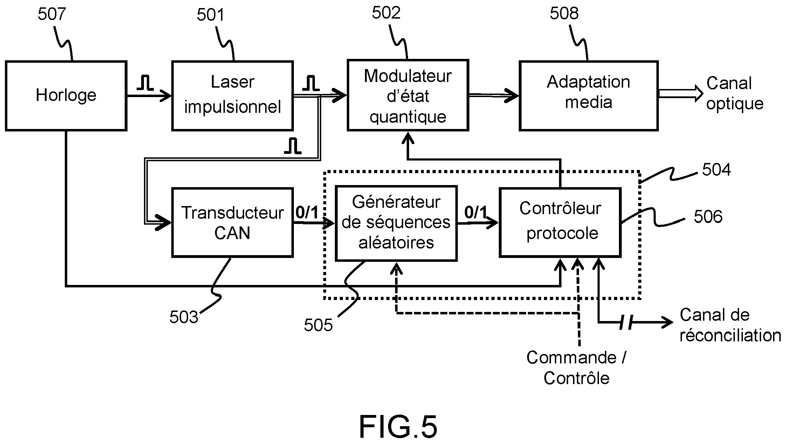

La figure 5 représente un dispositif de génération d'un signal optique selon un mode de réalisation de l'invention. Il comprend une source photonique 501, ici un laser impulsionnel émettant une série d'impulsions. Cette série d'impulsions est transmise d'une part à un modulateur d'état quantique 502, et d'autre part à un transducteur CAN 503. La division du flux d'impulsions peut se faire par exemple à l'aide d'un diviseur optique, comme un miroir semi-réfléchissant, qui va prélever et rediriger une partie du flux optique principal.

Le transducteur CAN 503 est constitué d'un transducteur qui convertit une propriété quantique de l'impulsion optique en un signal électrique, et d'un convertisseur analogique / numérique CAN qui convertit le signal électrique en valeur numérique (mot binaire). Le transducteur CAN 503 est configuré pour convertir chaque impulsion optique d'un des flux d'impulsions générés par ladite source photonique en un mot binaire aléatoire, en exploitant pour cela les propriétés quantiques des impulsions, de manière comparable à ce qui est fait dans les générateurs quantiques de nombres aléatoires selon l'état de l'art tel que celui représenté à la figure 4. La succession des mots binaires aléatoires constitue une suite binaire aléatoire qui alimente une fonction de génération de séquences aléatoire 505.

Le dispositif de génération d'un signal optique selon l'invention comprend également des moyens de calcul numériques 504, tel que par exemple un ASIC, un FPGA, un DSP, ou un microprocesseur, configuré pour réaliser la fonction 505 de génération de séquences aléatoires, et une fonction 506 de contrôleur de protocole.

La fonction de génération de séquences aléatoires 505 prend comme entrée la suite binaire aléatoire délivrée par le transducteur CAN 503, et l'utilise pour générer une ou plusieurs séquences aléatoires ayant une distribution de probabilité et un rythme adaptées au protocole d'échange de clés implémenté. En effet, la suite binaire aléatoire délivrée par le transducteur CAN 503 a un rythme proportionnel au rythme des impulsions du laser 501, potentiellement insuffisant pour générer les mots de commande utilisés par le modulateur d'état quantique 502 pour définir le contenu et les caractéristiques des impulsions optiques (qubit, leurre). Ce rythme doit être augmenté et la distribution de probabilité adaptée au protocole de transmission choisi. Par exemple, dans le cas d'un protocole BB84 decoy implémenté par des mots de commande à 4 bits comme décrit précédemment, une implémentation possible consiste à générer :
- une séquence au rythme des impulsions, ayant une première densité de probabilité pour définir si l'impulsion est une impulsion de signal ou une impulsion de leurre,
- une séquence au rythme des impulsions, ayant une deuxième densité de probabilité pour définir l'amplitude des impulsions de leurre,
- une séquence, au rythme des impulsions, ayant une troisième densité de probabilité pour la base d'encodage des qubits,
- une séquence, au rythme des impulsions, ayant une densité de probabilité égale à la troisième densité de probabilité pour la valeur des qubits,
- etc.

Lorsque des suites aléatoires ont des densités de probabilité égales, comme celles pour la base d'encodage et la valeur des qubits, elles peuvent être regroupées au sein d'une même séquence aléatoire dont le rythme est augmenté par rapport au rythme binaire de la suite binaire aléatoire utilisée en entrée.

La génération, à partir d'une première séquence aléatoire (séquence mère), d'une nouvelle séquence aléatoire (séquence fille) dont les propriétés (rythme et densité de probabilité) sont ajustées par rapport à un besoin donné est une opération connue de l'homme du métier, et peut se faire en appliquant des fonctions mathématiques, comme par exemple une fonction à sens unique comme le hachage (*hash* en anglais), sur les séquences aléatoires fille. Ces fonctions mathématiques assurent qu'il est impossible à un observateur (Eve) de retrouver à partir d'une des séquences aléatoires (fille) qui aurait été reconstituée, les autres séquences aléatoires. D'autres fonctions mathématiques, comme le mélange (permutation aléatoire) des séquences sont aussi possibles.

Le choix du nombre de séquences, de leurs rythmes et des densités de probabilité respectives dépend du protocole quantique d'échange de clé implémenté.

Les moyens de calcul numériques 504 sont configurés pour réaliser une fonction de contrôleur de réseau 506, qui consiste à :
- utiliser la ou les séquences aléatoires générées par le générateur 505 pour former, pour chaque impulsion, des instructions de commande du modulateur d'état quantique 502. Ces instructions définissent donc les qubits et les leurres qui seront transmis sur le lien optique conformément au protocole de QKD implémenté,
- éventuellement, échanger avec le récepteur à travers un canal de réconciliation radiofréquence (RF) ou optique, afin de déterminer une clé secrète,
- lorsque le dispositif de génération d'un signal optique est compatible de plusieurs protocoles de QKD, ajuster les propriétés de la fonction de génération de séquences aléatoires 505 en fonction du protocole choisi.

Le modulateur d'état quantique 502 a deux actions sur les impulsions optiques délivrées par le laser impulsionnel 501 : il atténue l'intensité de l'impulsion optique pour fixer le nombre moyen de photons par impulsion et il fixe l'état quantique des photons de l'impulsion. L'intensité de l'impulsion (nombre moyen de photon) et l'état quantique des photons sont définis pour chaque impulsion par un mot de commande fourni par le contrôleur de protocole 506. Le modulateur d'état quantique 502 modifie le flux d'impulsions optiques générées par le laser impulsionnel 501 en une succession de qubits et de leurres, en fixant le nombre moyen et l'état quantique des photons de chaque impulsion optique en accordance avec le mot de commande donné par des moyens de calcul numériques 504. Pour cela, il encode les qubits et les leurres en ajustant l'amplitude des impulsions (nombre moyen de photons par impulsion) et l'état (par exemple la polarisation) des photons conformément au mot de commande transmis par le contrôleur de protocole 506.

Avantageusement, le dispositif de génération d'un signal optique selon l'invention comprend une horloge 507 utilisée pour cadencer les émissions de la source photonique 501, et pour synchroniser la fonction de contrôleur de protocole 506 avec le flux d'impulsions.

Avantageusement toujours, le dispositif de génération d'un signal optique selon l'invention comprend un dispositif d'adaptation au média de transmission 508. Le média de transmission (canal optique) peut être l'espace libre, ou une fibre optique. Le dispositif d'adaptation au média 508 contrôle par exemple les axes de polarisation du signal optique émis en fonction du média, en définissant de façon absolue l'axe de polarisation, qui peut différer selon le support. Cette adaptation se fait en collaboration avec le récepteur pour mesurer les distorsions des états quantiques (par exemple la polarisation) provoquées par la propagation sur le média de transmission. Cette mesure des distorsions peut se faire par exemple via le canal optique avant transmission des qubits dans le cas d'une transmission sur fibre ou via un canal optique de référence dédié à cette fonction dans le cas d'une transmission en espace libre.

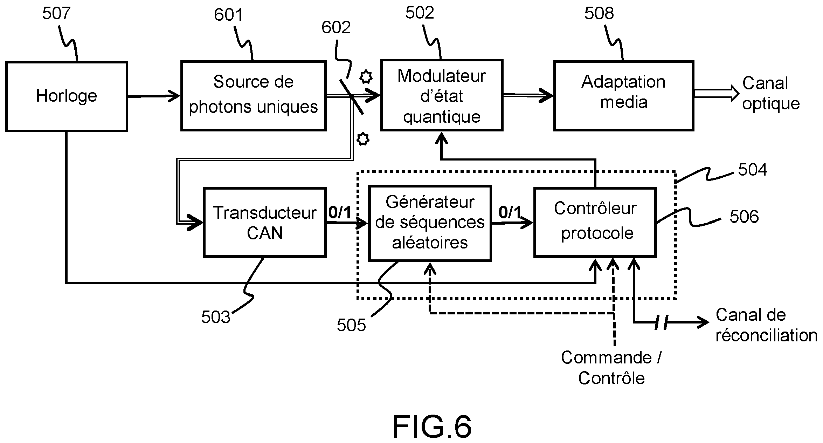

La figure 6 représente un dispositif de génération d'un signal optique selon un autre mode de réalisation de l'invention. Dans ce mode de réalisation, la source photonique 601 est une source de photons uniques connue de l'homme de l'art. Le dispositif comprend alors un dispositif de séparation des photons 601, comme par exemple une lame séparatrice. Une partie des photons est prélevée pour alimenter le modulateur d'état quantique 502, et l'autre partie est transmise au transducteur CAN 503. A l'exception de la source de photons, le fonctionnement du dispositif est identique à celui décrit à la figure 5.

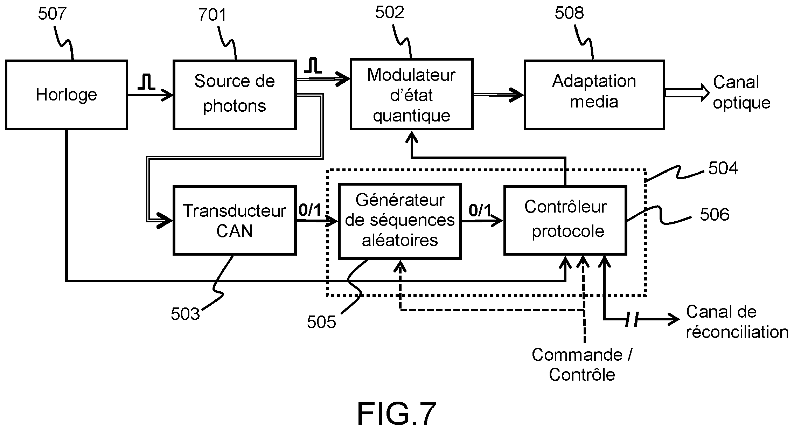

La figure 7 représente un dispositif de génération d'un signal optique selon un autre mode de réalisation de l'invention, dans lequel la source de photons 701 est configurée pour générer deux flux de photons, un premier flux vers le modulateur d'état quantique 502 et un deuxième flux vers le transducteur CAN 503. Deux lasers impulsionnels montés en parallèle ou deux sources de photons uniques constituent des exemples de source de photons à deux sorties.

Le dispositif de génération d'un signal optique selon l'invention limite le nombre d'équipements nécessaires pour l'émission d'un signal optique permettant l'échange quantique de clés, en utilisant une même source de photons pour réaliser trois fonctions/équipements : le générateur de nombre aléatoires, le contrôleur de protocole et l'émetteur/modulateur de photons. Ces fonctions/équipements peuvent ainsi être intégrées dans un équipement unique. Les avantages d'un tel équipement sont :
- une réduction de la masse, de la consommation électrique et du volume de l'équipement, lié en particulier à l'intégration du générateur de séquences aléatoires dans le même équipement que le contrôleur de protocole et l'émetteur de photons,
- une réduction du coût total,
- une augmentation de la robustesse face aux attaques par analyse des radiations électromagnétiques sur les liens de communication entre équipements, puisque l'ensemble des fonctions peuvent être mises en oeuvre au sein d'un même équipement, éventuellement blindé et sécurisé, augmentant ainsi la compatibilité aux normes TEMPEST prévenant les fuites électromagnétiques (et donc les risques de cyberattaques) et les interférences environnementales.

L'invention inclut un générateur de séquences aléatoires 505, qui permet une augmentation des performances en débit (fréquence de transmission) et en entropie (qualité de l'aléa) de la suite binaire aléatoire générée par le transducteur CAN 503. Une liaison d'échange quantique de clés (QKD) utilisant l'invention comme émetteur de qubits (Alice) sera plus performante que celles de l'art antérieur, et permettra d'échanger plus de clés. En outre, le générateur de séquences aléatoires permet d'offrir une très bonne entropie des données transmises, et donc participe à une bonne qualité des clés quantiques échangées.

Enfin, l'intégration du générateur de séquences aléatoires et du protocole dans un même dispositif permet en outre de supprimer la connexion entre ces deux unités, et donc d'augmenter encore le débit de génération de l'aléa.

L'invention concerne un dispositif servant d'émetteur de suites aléatoires de qubits pour une liaison d'échange quantique de clé. Le dispositif peut être constitué d'équipements distincts (horloge 507, source de photons 501, modulateur 502, transducteur CAN 503 et moyens de calcul 504), mais également sur un dispositif complet intégrant l'ensemble de ces équipements. Il peut être utilisé par exemple :
- pour une liaison d'échange quantique de clé sur fibre optique,
- embarqué dans un satellite pour réaliser une liaison d'échange quantique de clés entre un satellite (Alice) et une station optique terrestre (Bob).

Son utilisation pour des applications d'échange quantique de clés dans le domaine spatial offre d'importants avantages :
- la simplification de la charge utile du satellite offrant un budget de masse, consommation et volume compétitif,
- la réduction du coût du développement, d'assemblage, d'intégration et de tests (AIT) de la charge utile,
- la réduction des fuites électromagnétiques révélant les nombres aléatoires sur différents signaux de la charge utile.

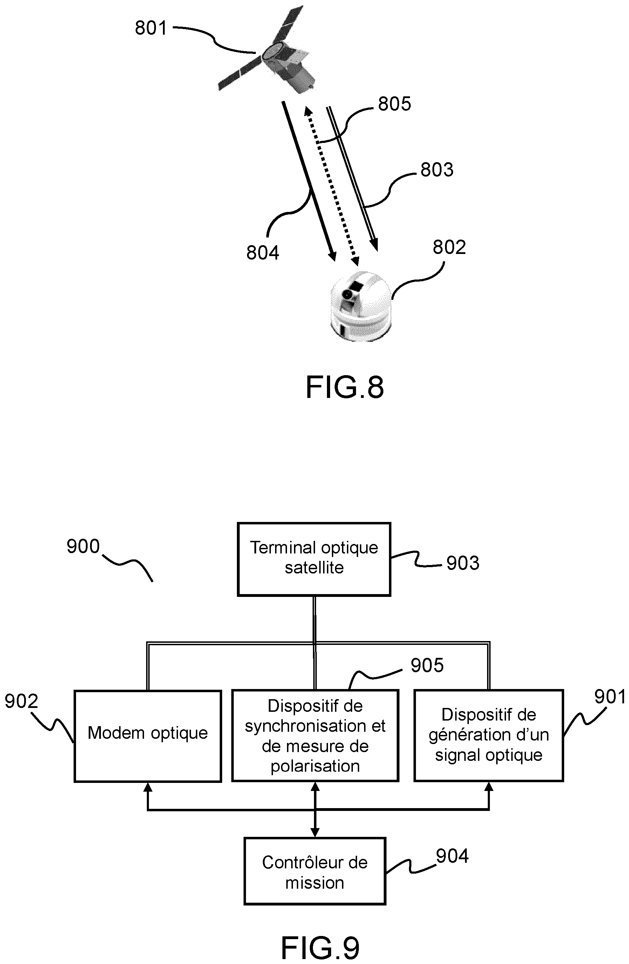

La figure 8 illustre les composantes d'une mission d'échange quantique de clés par satellite. On y trouve deux stations, une station satellitaire 801 (Alice) et une station optique terrestre 802 (Bob), avec :
- une liaison optique quantique 803, réalisée grâce à l'emport, à bord du satellite, d'un dispositif d'émission d'un signal optique selon l'invention (émetteur de qubits) et d'un terminal optique (télescope),
- une liaison « classique » 804, optique ou RF, permettant d'assurer la réconciliation des données, qui nécessite à bord du satellite un modem optique et un terminal optique pour un lien optique, ou un modem RF et une antenne pour un lien RF.
- une liaison de servitude optique 805, permettant :
   ∘ la synchronisation entre l'émetteur de qubit (le dispositif d'émission d'un signal optique selon l'invention) et le récepteur de qubit de la station,
   ∘ la mesure des distorsions de la polarisation provoquées par la propagation en espace libre et la traversée de l'atmosphère du signal optique. Cette mesure permet d'agir sur l'adaptation media 508 du dispositif de l'invention.

La figure 9 illustre un exemple de charge utile embarquée à bord d'un satellite, dans le cas où la liaison de réconciliation est assurée par un lien optique. La charge utile 900 comprend un dispositif de génération d'un signal optique selon l'invention 901, un modem optique 902 permettant de transmettre les données de réconciliation échangée entre le dispositif 901 et le récepteur, tous deux reliés à un terminal optique 903, ou télescope. La charge utile comprend également un dispositif de synchronisation et de mesure de polarisation 905 assurant la synchronisation du récepteur de qubit de la station terrestre avec le dispositif de l'invention et la mesure des distorsions de la polarisation du canal optique. La charge utile est complétée par un contrôleur de mission 904, configuré pour assurer l'établissement, le maintien et la fermeture des liaisons (quantiques et classiques), le séquencement des opérations, et la gestion de la charge utile, dont la commande et le contrôle du dispositif de génération du signal 901.

Lorsque le canal de réconciliation est un canal radiofréquence, alors le modem 902 est un modem RF, relié à une antenne.

L'échange quantique de clés par satellite peut être mis en oeuvre de manière équivalente en utilisant la station optique terrestre comme émetteur et le satellite comme récepteur.

## Revendications

1. Dispositif de génération d'un signal optique sous la forme d'une succession d'impulsions optiques (303) dont un état quantique code une information binaire pour l'échange quantique de clés entre un émetteur (101) et un récepteur (103), le dispositif comprenant, dans un même équipement :
- une source photonique (501, 601, 701) configurée pour générer au moins un flux d'impulsions comprenant un ou plusieurs photons,
- un modulateur d'état quantique (502) configuré pour générer ledit signal optique à partir d'un des flux d'impulsions générés par ladite source photonique (501, 601, 701) en ajustant le nombre et l'état quantique du ou des photons des impulsions, lesdits nombre et état quantique du ou des photons des impulsions étant définis par un mot de commande,
le dispositif étant **caractérisé en ce qu'**il comprend en outre, dans ledit équipement :
- un dispositif dit transducteur CAN (503) configuré pour convertir les photons d'un des flux d'impulsions générés par ladite source photonique en une suite binaire aléatoire,
- des moyens de calcul numériques (504) configurés pour :
∘ générer au moins une séquence aléatoire (505) ayant une distribution de probabilité et un rythme donnés, à partir de la suite binaire aléatoire produite par ledit transducteur CAN,
∘ générer le mot de commande (506) transmis audit modulateur d'état quantique (502) conformément à un protocole d'échange de clés donné, à partir de ladite au moins une séquence aléatoire.

2. Dispositif de génération d'un signal optique selon la revendication 1, comprenant en outre un dispositif (508) d'adaptation du signal optique délivré par le modulateur d'état quantique (502) au média de transmission dudit signal optique.

3. Dispositif de génération d'un signal optique selon la revendication 2, dans lequel le media de transmission du signal optique est choisi parmi une fibre optique et l'espace libre.

4. Dispositif de génération d'un signal optique selon l'une des revendications précédentes, dans lequel la source photonique est un parmi :
- un laser impulsionnel (501) configuré pour générer un flux d'impulsions optiques, associé à un diviseur de puissance configuré pour générer au moins deux flux d'impulsions à partir dudit flux d'impulsions du laser impulsionnel,
- un laser impulsionnel (701) configuré pour générer deux flux d'impulsions,
- une source de photons unique (601) configurée pour générer un flux d'impulsions comprenant chacune un photon, associée à une lame séparatrice (602) configurée pour diviser ledit flux d'impulsions en au moins deux flux d'impulsions distincts,
- une source de photons unique (701) configurée pour générer deux flux de photons uniques.

5. Dispositif de génération d'un signal optique selon l'une des revendications précédentes, dans lequel le transducteur CAN (503) est configuré pour exploiter un phénomène quantique aléatoire des photons d'un des flux d'impulsions générés par la source photonique pour déterminer ladite suite binaire aléatoire.

6. Dispositif de génération d'un signal optique selon la revendication précédente, dans lequel ledit phénomène quantique aléatoire exploité par le transducteur CAN (503) est choisi parmi :
- une phase initiale des impulsions,
- une amplitude des impulsions,
- un instant d'apparition des impulsions,
- un motif de chatoiement des impulsions.

7. Dispositif de génération d'un signal optique selon l'une des revendications précédentes, dans lequel ladite au moins une séquence aléatoire (505) générée par les moyens de calcul (504) est obtenue en appliquant des fonctions mathématiques à sens unique à la suite binaire aléatoire produite par le transducteur CAN (503).

8. Dispositif de génération d'un signal optique selon l'une des revendications précédentes, dans lequel les moyens de calcul numériques (504) sont en outre configurés pour mettre en oeuvre un processus de réconciliation des données transmises au récepteur.

9. Charge utile (900) pour un satellite (801) configuré pour réaliser une mission d'échange quantique de clés avec une station terrestre (802), la charge utile étant **caractérisée en ce qu'**elle comprend :
- un dispositif (901) de génération d'un signal optique selon l'une des revendications précédentes,
- un terminal optique (903) relié à une sortie du dispositif (901) de génération d'un signal optique,
- un modem optique (902) relié audit terminal optique (903) ou un modem radiofréquence relié à une antenne radio,
- un contrôleur de mission (904) configuré pour superviser le séquencement des opérations d'échange quantique de clés, et
- un dispositif de synchronisation et de mesure de polarisation (905) configuré pour assurer une synchronisation entre le dispositif (901) de génération d'un signal optique et la station terrestre, et pour mesurer des distorsions subies par le signal optique entre le dispositif (901) de génération d'un signal optique et la station terrestre.
